# EUROPÄISCHE PATENTSCHRIFT

(11) **EP 0 671 599 B1**
(45) Veröffentlichungstag und Bekanntmachung des Hinweises auf die Patenterteilung: **17.09.2003**
(21) Anmeldenummer: 95102953.7
(22) Anmeldetag: 02.03.1995
(51) Int. Cl.: G01B 5/00, G01B 13/02, G01B 13/10

(54) **Verfahren und pneumatisches Messwerkzeug zur Überwachung von Abmessungen eines Werkstückes**
Method and pneumatic measuring device to control the dimensions of a workpiece
Procédé et appareil de mesure pneumatique pour contrôler des dimensions d'un objet

(30) Priorität: 04.03.1994 DE 4407159
(43) Veröffentlichungstag der Anmeldung: 13.09.1995
(73) Patentinhaber: STOTZ FEINMESSTECHNIK GmbH, D-70839 Gerlingen (DE)
(72) Erfinder: Basar, Ivan, D-70469 Stuttgart (DE)
(74) Vertreter: Manitz, Finsterwald & Partner

(56) Entgegenhaltungen:
- DE-A- 1 623 324
- GB-A- 674 182
- US-A- 2 621 511
- US-A- 3 792 605
- US-A- 4 122 703

## Beschreibung

Derartige Verfahren und Messwerkzeuge sind grundsätzlich bekannt. In diesem Zusammenhang kann beispielhaft auf das Lehrbuch von G. Flores "Grundlagen und Anwendung des Honens", Vulkan-Verlag-Essen, 1992, Seiten 184 bis 195, (ISBN 3-8027-2904-8), verwiesen werden. Danach sind entsprechende Messvorrichtungen an Honmaschinen angeordnet, um den Werkzeugkopf in Abhängigkeit von Messsignalen steuern zu können.

Bei bisher üblichen Messwerkzeugen erfolgt eine Relativmessung, indem die Druckdifferenz zwischen einem Messpunkt an der die Vordrossel mit der Messdüse verbindenden Leitung und einem weiteren Messpunkt ermittelt wird, der an einer zur vorgenannten Leitung parallelen Referenzleitung zwischen einer weiteren Vordrossel und einer dazu in Reihe angeordneten Referenzdüse angeordnet ist. Die Referenzdüse ist so bemessen, daß am Differenzdrucksensor Druckgleichheit auftritt, wenn das Werkstück die gewünschte Abmessung, beispielsweise einen gewünschten Bohrungsdurchmesser, aufweist. Abweichende Abmessungen des Werkstücks führen dazu, daß gegenüber einem Sollabstand zwischen Messdüse und Werkstückoberfläche ein verminderter Abstand oder ein vergrößerter Abstand auftreten. Im ersteren Falle muß das Werkstück noch durch Materialabtrag nachbearbeitet werden. Im letzteren Falle wurde zuviel Material abgetragen.

Bei dieser bekannten Anordnung ist zwar das Vorzeichen der an dem Differenzdrucksensor auftretenden Druckdifferenz umkehrbar eindeutig mit dem Vorzeichen der Maßabweichung des Werkstücks vom Sollmaß gekoppelt. Jedoch ist der Betrag der Druckdifferenz nur dann ein zur Maßabweichung des Werkstückes analoges Maß, wenn der pneumatische Druck eingangsseitig den Vordrosseln konstant bleibt. Hier muß jedoch mit gewissen Druckschwankungen gerechnet werden. Damit kann aber aus der Größe der am Differenzdrucksensor auftretenden Druckdifferenz nicht auf die Größe der Maßabweichung geschlossen werden. Erschwerend kommt hinzu, daß bei einem starken Abfall des pneumatischen Druckes vor den Vordrosseln oder gar bei einem Ausfall der pneumatischen Druckquelle am Differenzdrucksensor Druckgleichheit auftritt und eine exakte Maßgenauigkeit des Werkstückes vortäuscht.

Die Erfindung betrifft ein Verfahren und ein pneumatisches Meßwerkzeug zur Überwachung von Abmessungen eines Werkstückes nach dem Oberbegriff von Anspruch 1 beziehungsweise dem Oberbegriff von Anspruch 5.

Ein solches Verfahren und ein solches Meßwerkzeug sind aus der US-A-2 621 511 bekannt. Bei dieser bekannten Vorrichtung ist jeweils ein Drucksensor vor und nach der Vordrossel angeschlossen. Wie sich insbesondere aus Spalte 3, Zeilen 9 bis 15 ergibt, wird zur Bestimmung einer Maßabweichung eines Werkstückes mittels des Drucksensors 8 der Eingangsdruck vor der Vordrossel auf ein gewünschtes Maß eingestellt und über die verstellbare Drossel 12 der zweite Drucksensor 13 bei in die Messdüse 11 eingesetztem Standardwerkzeug 14 auf "0" justiert.

Bei dieser bekannten Anordnung ist daher das Vorzeichen der an dem Drucksensor auftretenden Druckdifferenz umkehrbar eindeutig mit dem Vorzeichen der Maßabweichung des Werkstückes vom Sollmaß gekoppelt. Wie vorstehend ausgeführt, ist jedoch der Betrag der Druckdifferenz nur dann ein zur Maßabweichung des Werkstückes analoges Maß, wenn der pneumatische Druck eingangsseitig der Vordrossel konstant bleibt. Daher muß der Eingangsdruck bei auftretenden Druckschwankungen über das Regelventil 5 und mit Hilfe des Drucksensors 8 nachgeregelt werden.

Die US-A-4 122 703 betrifft eine pneumatische Messeinrichtung_{,} mit welcher Fäden oder Garne überwacht werden. Bei dieser bekannten Vorrichtung ist zwischen Vordrossel und Messdüse ein pneumatischer Verstärker eingeschaltet, der über den Gegendruck der Messdüse betätigt wird, um die Fadenbewegung bei einer Abweichung des Fadens von der Norm zu stoppen oder eine andere Maßnahme zu ergreifen. Eine genaue Druckmessung findet hier nicht statt. Außerdem wird auch hier der Eingangsdruck konstant gehalten, und es fehlt hier an einer genauen Bestimmung der Maßabweichung des ausgemessenen Objektes.

Die DE-OS 1623 324 betrifft ein Verfahren und eine Vorrichtung zur Überwachung einer Relativbewegung zwischen zwei Objekten (siehe beispielsweise Seite 6, erster Absatz). Dabei wird gemäß Seite 8, zweiter Absatz eine Heliumgasversorgung mit konstantem Druck aufrechterhalten.

Die GB-A-674 182 stimmt im Wesentlichen mit der US-A-2 621 511 überein. Auch hier ist vor und nach einer Drosselstelle jeweils ein Drucksensor vorhanden, wobei der erste Drucksensor in Verbindung mit einem Ventil 2 dazu verwendet wird, einen konstanten Druck einzustellen (siehe insbesondere Seite 2, Zeilen 20 bis 28), und am zweiten Drucksensor die Maßabweichung abgelesen wird.

Bei der Vorrichtung gemäß der US-A-3 792 605 wird der Druck hinter der Vordrossel konstant gehalten, um aus der Druckänderung vor der Vordrossel die Maßabweichung zu bestimmen. Es muß hier bei jeder Messung der Druck hinter der Vordrossel durch Verstellen des Regelventils 16 auf den Vorgabewert eingestellt werden. Siehe hierzu insbesondere die Zusammenfassung und Spalte 2, Zeilen 27 bis 38.

Der Erfindung liegt die Aufgabe zugrunde, ein Verfahren und eine Vorrichtung der zuvor genannten Art anzugeben, welche diese Nachteile nicht aufweisen.

Diese Aufgabe wird durch ein Verfahren mit den Merkmalen von Anspruch 1 gelöst. Außerdem wird diese Aufgabe durch ein pneumatisches Meßwerkzeug mit den Merkmalen von Anspruch 5 gelöst.

Durch das erfindungsgemäße Verfahren kann aus dem pneumatischen Druck vor oder hinter der Vordrossel und dem Druckabfall an der Vordrossel unmittelbar die Maßabweichung des Werkstückes ermittelt werden, ohne daß ein konstanter Eingangsdruck erforderlich wäre oder eingestellt werden müsste. Dabei kann der Druckabfall an der Vordrossel mit der erfindungsgemäßen Vorrichtung entweder direkt über einen mit einem Eingang vor und dem anderen Eingang hinter der Vordrossel angeschlossenen Differenzdrucksensor bestimmt werden, oder aber aus der Differenz der von zwei Differenzdrucksensoren gemessenen Druckwerte, die jeweils mit einem Ende an Atmosphäre sowie einer mit dem anderen Ende vor und der andere hinter der Vordrossel angeschlossen sind.

Der Druckabfall an der Vordrossel wird dann in eine Maßabweichung umgesetzt, wobei der ermittelte Eingangsdruck bei der Berechnung berücksichtigt wird, um auftretende Druckschwankungen auszugleichen.

Das erfindungsgemäße Verfahren und die erfindungsgemäße Vorrichtung zeichnen sich daher durch eine hohe Messgenauigkeit, eine einfache Bedienung und einen einfachen Aufbau aus.

Die Erfindung beruht auf dem allgemeinen Gedanken, daß durch die erfindungsgemäße Anordnung der Sensoren letztendlich die von der Meßdüse verbrauchte pneumatische Leistung ermittelbar ist, die sich ihrerseits mit dem Drosselwiderstand der Messdüse und dementsprechend mit den Abmessungen des Werkstückes analog ändert. Damit kann aber aus dem pneumatischen Druck vor der Vordrossel und dem Druckabfall an der Vordrossel unmittelbar die Maßabweichung des Werkstückes ermittelt werden.

Um jegliche Messfehler auszuschalten, können die Differenzdrucksensoren mit einer Auswerteeinheit verbunden sein, die die ermittelten Druckdifferenzen unmittelbar in eine Anzeige der Maßabweichungen des Werkstückes umsetzt.

Ein besonderer Vorzug der Erfindung liegt darin, daß die Funktion der pneumatischen Druckquelle zwangsläufig überwacht wird und dementsprechend Unterbrechungen der pneumatischen Druckversorgung zu keinerlei Meßfehlern führen können.

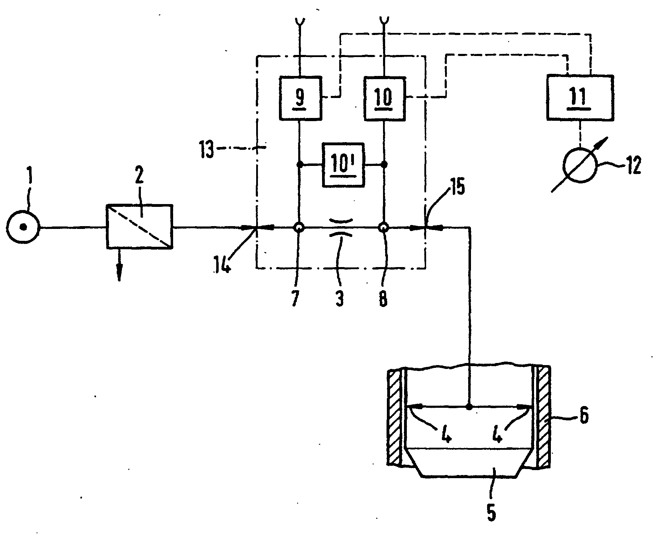

Im übrigen wird hinsichtlich bevorzugter Merkmale der Erfindung auf die abhängigen Ansprüche sowie die nachfolgende Erläuterung vorteilhafter Ausführungsformen verwiesen, die in der Zeichnung dargestellt sind.

Dabei zeigt die einzige Figur eine schaltplanartige Darstellung des erfindungsgemäßen Meßwerkzeuges.

Eine pneumatische Druckquelle 1 ist über eine Filtereinheit 2, in der die erzeugte Druckluft gereinigt und insbesondere von Öl befreit wird, mit dem Eingang einer Vordrossel 3 verbunden, die ausgangsseitig mit Meßdüsen 4 in einem Werkzeugkopf 5 verbunden ist.

Mit dem Werkzeugkopf 5 wird beispielsweise eine Bohrung in einem Werkstück 6 bearbeitet, wobei sich der zwischen der bearbeiteten Werkstückoberfläche und den Ausgängen der Meßdüsen 4 verbleibende Spalt in seiner Breite verändert. Damit ändert sich zwangsläufig der Drosselwiderstand der Meßdüsen 4.

Vor und hinter der Vordrossel 3 sind an Meßpunkten 7 und 8 Differenzdrucksensoren 9 und 10 angeordnet, mit denen sich der pneumatische Überdruck an den Meßpunkten 7 und 8 relativ zur Atmosphäre ermitteln läßt. Die Signale der Differenzdrucksensoren 9 und 10 werden einer Auswerteeinheit 11 zugeführt, die eine Anzeige 12 steuert.

Die Auswerteeinheit 11 ermittelt aus den Signalen der Differenzdrucksensoren 9 und 10 einerseits den pneumatischen Überdruck am Meßpunkt 7 und andererseits den Druckabfall zwischen den Meßpunkten 7 und 8, d.h. den Druckabfall an der Vordrossel 3. Aus diesen Meßwerten kann dann - nach entsprechender Eichung - unmittelbar das am Werkstück 6 zu überwachende Maß - hier die obengenannte Spaltweite - ermittelt und angezeigt werden.

Einer der Differenzdrucksensoren 9 und 10 kann auch durch einen Differenzdrucksensor 10' ersetzt werden, welcher unmittelbar die Druckdifferenz zwischen den Meßpunkten 7 und 8, d.h. den Druckabfall an der Vordrossel 3, ermittelt. Die Vordrossel 3 sowie die Differenzdrucksensoren 9 und 10 bzw. 10' sowie die zugehörigen Meßpunkte 7 und 8 können in bzw. an einem gemeinsamen Gehäuseblock 13 angeordnet sein, welcher mit Anschlüssen 14 und 15 für den Ausgang der Druckquelle 1 bzw. der Filtereinheit 2 sowie den pneumatischen Eingang des Werkzeugkopfes 5 versehen ist.

Abweichend von der dargestellten Ausführungsform, bei der die Meßdüsen 4 an einem Werkzeugkopf 5 angeordnet sind, können die Meßdüsen auch an einem gesonderten Meßkopf angeordnet sein. Soweit mit dem Meßkopf ein Innendurchmesser einer Bohrung od.dgl. überprüft werden soll, bildet der Meßkopf z.B. einen Meßdorn. Falls ein Außendurchmesser ermittelt werden soll, ist der Meßkopf nach Art eines Ringes ausgebildet. Die Meßdüsen 4 sind jeweils gegen das Werkstück gerichtet.

## Patentansprüche

1. Verfahren zur Überwachung von Abmessungen eines Werkstückes (6), bei welchem das Werkstück (6) mittels einer in Reihe hinter einer Vordrossel (3) angeordneten Meßdüse (4) pneumatisch beaufschlagt wird, wobei die Meßdüse (4) derart angeordnet wird, daß sie einen mit Abmessungen des Werkstückes (6) veränderlichen Drosselwiderstand aufweist und den einen Drucksensor (10) beaufschlagenden pneumatischen Druck zwischen Vordrossel (3) und Meßdüse (4) entsprechend verändert,
**dadurch gekennzeichnet,**
**daß** der pneumatische Überdruck relativ zur Atmosphäre vor oder hinter der Vordrossel (3) sowie der Druckabfall an der Vordrossel (3) mittels zwei Differenzdrucksensoren (9, 10, 10') ermittelt und mittels einer Auswerteeinheit (11) aus diesen Daten die Maßabweichung des Werkstückes (6) bestimmt wird.

2. Verfahren nach Anspruch 1,
**dadurch gekennzeichnet,**
**daß** vor und hinter der Vordrossel (3) der pneumatische Überdruck zur Atmosphäre mittels je eines Differenzdrucksensors (9, 10) ermittelt und aus der Differenz der ermittelten Druckwerte der Druckabfall an der Vordrossel (3) bestimmt wird.

3. Verfahren nach Anspruch 1,
**dadurch gekennzeichnet,**
**daß** der pneumatische Überdruck relativ zur Atmosphäre vor oder hinter der Vordrossel (3) mittels eines ersten Differenzdrucksensors (9) und der Druckabfall an der Vordrossel (3) mittels eines mit seinem einen Eingang vor der Vordrossel (3) und seinem anderen Eingang hinter der Vordrossel (3) angeschlossenen zweiten Differenzdrucksensors (10') ermittelt wird.

4. Verfahren nach einem der Ansprüche 1 bis 3,
**dadurch gekennzeichnet,**
**daß** die Signale der Differenzdrucksensoren (9, 10, 10') einer elektronischen Auswerteeinheit (11) zugeführt werden, die eine Meßanzeige (12) steuert.

5. Pneumatisches Meßwerkzeug zur Überwachung von Abmessungen eines Werkstückes (6) mit einer in Reihe hinter einer Vordrossel (3) angeordneten, das Werkstück (6) pneumatisch beaufschlagenden Meßdüse (4), die derart angeordnet ist, daß sie einen mit Abmessungen des Werkstückes (6) veränderlichen Drosselwiderstand aufweist und den einen Drucksensor (10) beaufschlagenden pneumatischen Druck zwischen Vordrossel (3) und Meßdüse (4) entsprechend verändert, und mit zwei vom pneumatischen Druck beaufschlagten Drucksensoren, von denen ein erster Drucksensor (9) mit einem Eingang vor der Vordrossel (3) und ein zweiter Drucksensor (10, 10') mit einem Eingang hinter der Vordrossel (3) angeschlossen ist,
**dadurch gekennzeichnet,**
**daß** die Drucksensoren (9, 10, 10') als Differenzdrucksensoren ausgebildet sind,
**daß** der zweite Eingang beider Differenzdrucksensoren (9, 10) an Atmosphäre oder der zweite Eingang eines Differenzdrucksensors (9) an Atmosphäre und des anderen Differenzdrucksensors (10') an die jeweils andere Seite der Vordrossel (3) angeschlossen ist und daß eine Auswerteeinheit (11) vorgesehen ist, durch welche aus dem pneumatischen Überdruck relativ zur Atmosphäre vor oder hinter der Vordrossel (3) und dem Druckabfall an der Vordrossel (3) die Maßabweichung des Werkstückes (6) ermittelbar ist.

6. Meßwerkzeug nach Anspruch 5,
**dadurch gekennzeichnet,**
**daß** vor und hinter der Vordrossel (3) je ein Differenzdrucksensor (9, 10) mit seinem einen Eingang angeschlossen ist, dessen anderer Eingang an die Atmosphäre angeschlossen ist.

7. Meßwerkzeug nach Anspruch 5,
**dadurch gekennzeichnet,**
**daß** vor oder hinter der Vordrossel (3) ein erster Differenzdrucksensor (9) mit seinem Eingang angeschlossen ist, welcher mit seinem anderen Eingang an die Atmosphäre angeschlossen ist, und daß ein weiterer Differenzdrucksensor (10') mit seinem einen Eingang vor und mit seinem anderen Eingang hinter der Vordrossel (3) angeschlossen ist.

8. Meßwerkzeug nach einem der Ansprüche 5 bis 7,
**dadurch gekennzeichnet,**
**daß** die Signalausgänge der Differenzdrucksensoren (9, 10, 10') an eine elektronische Auswerteeinheit (11) angeschlossen sind, die mit einer Meßanzeige (12) verbunden ist.

## Claims

1. A method for the monitoring of dimensions of a workpiece (6), in which the workpiece (6) is pneumatically acted on by means of a measuring nozzle (4) arranged in series behind a pre-restrictor (3), with the measuring nozzle (4) being arranged such that it has a throttle resistance which changes with the dimensions of the workpiece (6) and changes the pneumatic pressure between the pre-restrictor (3) and the measuring nozzle (4) which acts on a pressure sensor (10),
**characterised in that** the pneumatic overpressure relative to the atmosphere is determined before or after the pre-restrictor (3) and the pressure drop at the pre-restrictor (3) is determined by means of two pressure difference sensors (9, 10, 10') and the dimensional deviation of the workpiece (6) is determined from these data by means of an evaluation unit (11).

2. A method in accordance with claim 1, **characterised in that** the pneumatic overpressure with respect to the atmosphere is determined before and after the pre-restrictor (3) by means of one pressure difference sensor (9, 10) in each case and the pressure drop at the pre-restrictor (3) is determined from the difference of the pressure values determined.

3. A method in accordance with claim 1, **characterised in that** the pneumatic overpressure relative to the atmosphere is determined before or after the pre-restrictor (3) by means of a first pressure difference sensor (9) and the pressure drop at the pre-restrictor (3) is determined by means of a second pressure difference sensor (10') whose one input is connected before the pre-restrictor (3) and whose other input is connected after the pre-restrictor (3).

4. A method in accordance with any one of claims 1 to 3, **characterised in that** the signals of the pressure difference sensors (9, 10, 10') are supplied to an electronic evaluation unit (11) which controls a measurement display (12).

5. A pneumatic measurement tool for the monitoring of dimensions of a workpiece (6) having a measuring nozzle (4) which is arranged in series after a pre-restrictor (3), acts pneumatically on the workpiece (6) and is arranged such that it has a throttle resistance which changes with the dimensions of the workpiece (6) and accordingly changes the pressure between the pre-restrictor (3) and the measuring nozzle (4) acting on the pressure sensor (10) and having two pressure sensors which are acted on by the pneumatic pressure and of which a first pressure sensor (9) is connected to an input before the pre-restrictor (3) and a second pressure sensor (10, 10') is connected to an input after the pre-restrictor (3),
**characterised**
**in that** the pressure sensors (9, 10, 10') are made as pressure difference sensors;
**in that** the second input of both pressure difference sensors (9, 10) is connected to atmosphere, or the second input of one pressure difference sensor (9) is connected to atmosphere and the second input of the other pressure difference sensor (10') is connected to the other respective side of the pre-restrictor (3); and
**in that** an evaluation unit (11) is provided by which the dimensional deviation of the workpiece (6) can be determined from the pneumatic overpressure relative to the atmosphere before or after the pre-restrictor (3) and from the pressure drop at the pre-restrictor (3).

6. A measurement tool in accordance with claim 5, **characterised in that** the one input of a respective pressure difference sensor (9, 10) is connected before and after the pre-restrictor (3) and its other input is connected to the atmosphere.

7. A measurement tool in accordance with claim 5, **characterised in that** an input of a first pressure difference sensor (9) is connected before or after the pre-restrictor (3), and its other input is connected to the atmosphere; and **in that** the one input of a further pressure difference sensor (10') is connected before the pre-restrictor (3) and its other input is connected after the pre-restrictor (3).

8. A measurement tool in accordance with any one of claims 5 to 7, **characterised in that** the signal outputs of the pressure difference sensors (9, 10, 10') are connected to an electronic evaluation unit (11) which is connected to a measurement display (12).

## Revendications

1. Procédé de contrôle des dimensions d'une pièce à usiner (6), dans lequel la pièce à usiner (6) est attaquée pneumatiquement à l'aide d'un ajutage de mesure (4) disposé en série en aval d'un préétranglement (3), l'ajutage de mesure (4) étant disposé de telle sorte qu'il présente une résistance d'étranglement variable en fonction des dimensions de la pièce à usiner (6) et qu'il modifie en conséquence la pression s'exerçant sur un capteur de pression (10) se trouvant entre le préétranglement (3) et l'ajutage de mesure (4), **caractérisé en ce que** la surpression par rapport à l'atmosphère en amont ou en aval du préétranglement (3) ainsi que la perte de charge dans le préétranglement (3) sont déterminées à l'aide de deux capteurs de pression différentielle (9, 10, 10') et les écarts de dimensions de la pièce à usiner (6) sont déterminés à partir de ces données par une unité d'analyse (11).

2. Procédé selon la revendication 1, **caractérisé en ce qu'**en amont et en aval du préétranglement (3), la surpression pneumatique par rapport à l'atmosphère est déterminée à l'aide d'un capteur de pression différentielle (9, 10) et la perte de charge dans le préétranglement (3) est déterminée à partir de la différence des valeurs de pression constatées.

3. Procédé selon la revendication 1, **caractérisé en ce que** la surpression pneumatique par rapport à l'atmosphère en amont ou en aval du préétranglement (3) est déterminée à l'aide d'un premier capteur de pression différentielle (9) et la perte de charge dans le préétranglement (3) est déterminée à l'aide d'un deuxième capteur de pression différentielle (10') dont une entrée est reliée en amont du préétranglement (3) et l'autre entrée est reliée en aval du préétranglement (3).

4. Procédé selon l'une des revendications 1 à 3, **caractérisé en ce que** les signaux des capteurs de pression différentielle (9, 10, 10') sont entrés dans une unité d'analyse (11) qui commande un affichage de mesure (12).

5. Appareil de mesure pneumatique pour le contrôle des dimensions d'une pièce (6) ayant un ajutage de mesure (4) disposé en série en aval d'un préétranglement (3) et alimentant pneumatiquement la pièce (6), qui est disposé de telle sorte qu'il présente une résistance à l'étranglement variable en fonction des dimensions de la pièce (6) et qu'il modifie en conséquence la pression alimentant un capteur de pression (10) se trouvant entre le préétranglement (3) et l'ajutage de mesure (4), et ayant deux capteurs de pression alimentés par la pression pneumatique, dont un premier capteur de pression (9) est relié par une entrée en amont du préétranglement (3) et un deuxième capteur de pression (10, 10') est relié par une entrée en aval du préétranglement (3), **caractérisé en ce que** les capteurs de pression (9, 10, 10') sont conçus comme des capteurs de pression différentielle, la deuxième entrée des deux capteurs de pression différentielle (9, 10) est reliée à l'atmosphère ou la deuxième entrée d'un capteur de pression différentielle (9) est reliée à l'atmosphère et la deuxième entrée de l'autre capteur de pression différentielle (10') est reliée à l'autre côté du préétranglement (3) et une unité d'analyse (11) est prévue, à l'aide de laquelle l'écart de dimension de la pièce (6) peut être déterminé à partir de la surpression pneumatique par rapport à l'atmosphère en amont ou en aval du préétranglement (3) et à partir de la perte de charge au niveau du préétranglement (3).

6. Appareil de mesure selon la revendication 5, **caractérisé** en ce chacun des capteurs de pression (9,10) est relié par une de ses entrées en amont et en aval du préétranglement (3), tandis que l'autre entrée est reliée à l'atmosphère.

7. Appareil de mesure selon la revendication 5, **caractérisé en ce qu'**un premier capteur de pression différentielle (9) est relié en amont et en aval du préétranglement (3) par une entrée, tandis que l'autre entrée est reliée à l'atmosphère, et **en ce qu'**un autre capteur de pression (10') est relié, par une de ses entrées, en amont du préétranglement (3) et par l'autre entrée, en aval du préétranglement (3).

8. Appareil de mesure selon l'une des revendications 5 à 7, **caractérisé en ce que** les sorties de signaux des capteurs de pression différentielle (9, 10, 10') sont reliées à une unité d'analyse électronique (11) reliée à un affichage (12).
